Europäisches Patentamt

(19) European Patent Office

Office européen des brevets

(11) Publication number: **0 026 931**
**B1**

(12) **EUROPEAN PATENT SPECIFICATION**

(45) Date of publication of patent specification: **11.05.83**

(51) Int. Cl.³: **H 04 L 5/14**

(21) Application number: **80106010.4**

(22) Date of filing: **03.10.80**

(54) **Transceiver for full duplex transmission of digital signals on a single line.**

(30) Priority: **04.10.79 IT 6891479**

(43) Date of publication of application:
**15.04.81 Bulletin 81/15**

(45) Publication of the grant of the patent:
**11.05.83 Bulletin 83/19**

(84) Designated Contracting States:
**DE FR GB NL SE**

(56) References cited:
**US - A - 3 725 582**
**US - A - 3 993 867**
**US - A - 4 152 541**
**US - A - 4 162 371**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Belforte, Piero**
**Via Fabbriche, 7**
**Torino (IT)**
Inventor: **Bortignon, Renzo**
**Via Ciriè, 63**
**Borgaro Torinese Torino (IT)**

(74) Representative: **Riederer Freiherr von Paar zu Schönau, Anton**
**Müllerstrasse 31**
**D-8000 München 5 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

## Transceiver for full duplex transmission of digital signals on a single line

The present invention relates to a transceiver for full-duplex transmission of digital signals on a single line in accordance with the precharacterizing portion of claim 1.

When a full-duplex transmission is effected between two transmitting and receiving terminals (transceivers) through a single line, at the ends of this line a composite signal deriving from the superimposition of the signals transmitted by both terminals will be present. Each terminal will then comprise circuits permitting to separate from the composite signal the signal coming from the remote terminal, and this is generally obtained by subtracting from the composite signal the locally generated signal. It is known that the present technique trend is to realize such transceivers as integrated circuits. An example is described by W. Wilhelm, K. R. Schön and H. Kaiser in the paper "A novel high speed interface circuit saving wiring equipment" (IEEE Journal of Solid State Circuits, Vol. SC. 13, No. 3, June 1978). In that transceiver, that can be used for balanced transmissions and realized as integrated circuit, the signal transmitted by the remote terminal is separated from the composite signal present on the line by using a resistor network designed so as to annul the component due to the local transmitter in the composite signal. Such a network comprises also the line terminations and the load resistors of the line driver. Similar transceivers are known from US—A—4 162 371 for unbalanced lines and from US—A—3 725 582 for both balanced and unbalanced lines.

It is an object of the invention to realize a transceiver of the above kind, suitable for use with a wide range of characteristic line impedances by only changing the termination impedances and at the same time to enable high transmission rates and signal to noise ratios to be attained. This object is attained by the features of the characterizing portion of claim 1.

The characteristics of the invention will become clearer from the following description of a preferred embodiment thereof given by way of example and not in a limiting sense, with reference to the annexed drawings in which:

Fig. 1 is a basic diagram of the transceiver according to the invention, for the case of balanced signals;

Fig. 2 is the circuit diagram corresponding to the basic diagram of Fig. 1;

Fig. 3 is a variant of Fig. 1, for the case of unbalanced signals;

Fig. 4 is the circuit diagram corresponding to the basic diagram of Fig. 3;

Fig. 5 is a circuit diagram showing that the same mask can be utilized for both balanced and unbalanced signals.

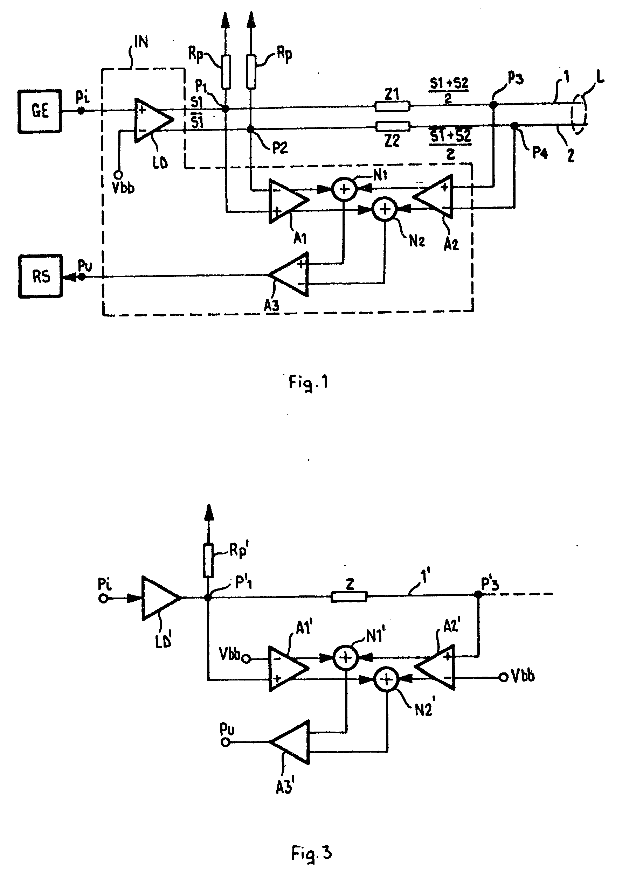

In Fig. 1, a pulse generator GE is connected to a line driver LD which is further connected to a source of an intermediate voltage $V_{bb}$ and which amplifies the pulses generated by GE to a level suitable for the transmission and, for each pulse, emits at a first output, denoted by +, a signal S1 having the same polarity as the pulse emitted by GE and on a second output, denoted by —, the complement signal $\overline{S1}$.

The two signals are sent respectively on conductors 1 and 2 of a balanced transmission line L, connected to line driver LD through the two termination impedances Z1, Z2, whose value is equal to half the characteristic impedance of line L.

Load resistors Rp of circuit LD and two inputs of a first differential amplifier A1 are connected to two points P1, P2, located between circuit LD and termination impedances Z1, Z2.

Amplifier A1 provides at the two outputs signal proportional to the output signals of LD. A second differential amplifier A2, connected to two points P3, P4 of the line in correspondance with the opposite terminals of Z1, Z2, supplies on its outputs signals proportional to the composite signals present on the line and resulting from the superimposition of the signals emitted by LD and by the analogous driver of the remote line terminal (not represented).

If S2, $\overline{S2}$ are the signals emitted by the remote driver, the composite signals will be

$$\frac{S1}{2} + \frac{S2}{2}$$

or respectively

$$\frac{\overline{S1}}{2} + \frac{\overline{S2}}{2}$$

The inverting output of A1 and the non-inverting (normal) output of A2 are connected to a first summing node N1, while the non-inverting output of A1 and the inverting output of A2 are connected to a second summing node N2. Taking into account that at points P1, P2 the complete signals S1, $\overline{S1}$ are present, while at points P3, P4 the half-sum of signals S1, S2 (or $\overline{S1}$, $\overline{S2}$) is present, nodes N1, N2 will supply signals S1, S2 if the gain of amplifier A1 is half the gain of amplifier A2.

A third amplifier A3 has its inputs connected to nodes N1, N2 and the output connected to a signal receiver RS; amplifier A3 will compensate the attenuations undergone by the signal in the transmission along the line.

The set of LD, A1, A2, A3 can be realized as an integrated circuit, denoted by dotted-line block IN, of which some pins are connected to points P1, P2, P3, P4, to input Pi of LD and to output Pu of A3.

It will be noted that termination impedances Z1, Z2 and resistors Rp are outside the integrated circuit, and then can be chosen every time so as to have always a perfect matching to the line and to regulate the circuit dissipation according to the application.

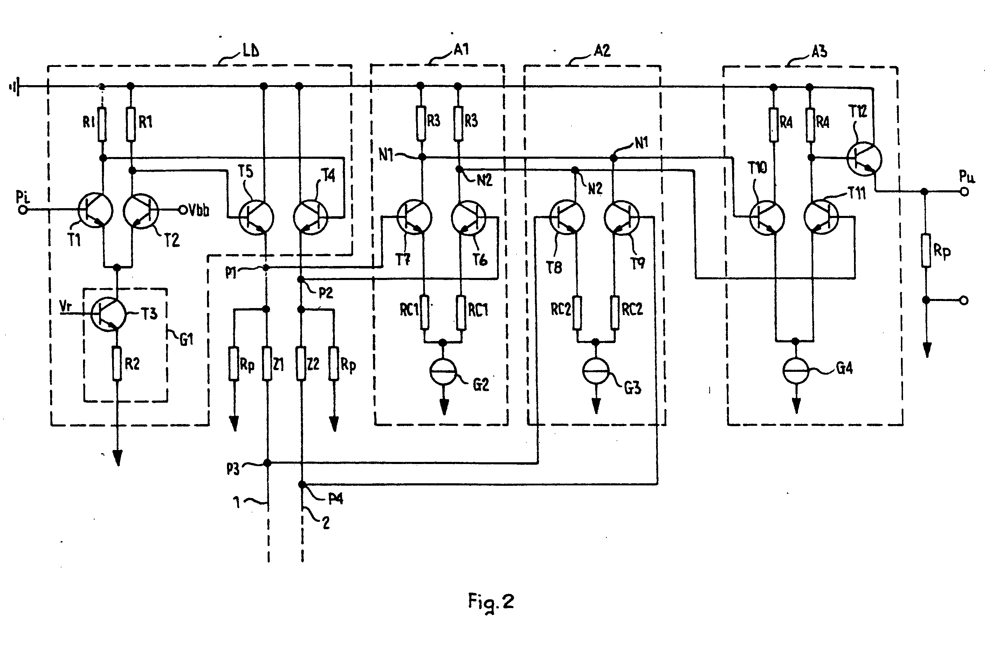

A possible diagram of the integrated circuit is represented in Fig. 2 in the case of ECL (emitter coupled logic) logic.

Input Pi of circuit LD is connected to the base of a first transistor T1, that together with second and third transistors T2, T3 form a differential amplifier at whose outputs two signals having opposite polarity are obtained. More particularly a signal having polarity equal to the one of the signal present on Pi will be extracted from the collector of T2 and the complement signal will be extracted from the collector of T1. The collectors of T1, T2 are grounded through resistors R1; the base of transistor T3 (that with emitter resistor R2 forms a current generator G1) is connected to a reference voltage Vr negative with respect to ground, while the base of T2 is connected to a voltage Vbb intermediate between high and low logic levels.

The signals present on collectors of T1, T2 are supplied to the bases of two further transistors T4, T5 connected in the "emitter follower" configuration; the emitters of T4, T5 are connected both to points P2 and P1, and to the bases of two transistors T6, T7, that with a generator G2 identical to G1, form amplifier A1. The collectors of T6, T7 are grounded through resistors R3; besides they are directly connected to the collectors of two further transistors T8, T9 that, with generator G3 (identical to G1, G2), form amplifier A2. The bases of T8, T9 are connected to points P3, P4 and the points common to the collector of T7, T9 and T6, T8, form respectively the nodes N1, N2 of Fig. 1. The emitters of T6, T7 are connected to generator G2 through feedback resistors RC1, and the emitters of T8, T9 are connected to generator G3, through feedback resistors RC2. The resistances of RC1, RC2 are chosen so that the gain of amplifier A1 is half the gain of amplifier A2, for the reasons previously explained.

Nodes N1, N2 are connected to the bases of two further transistors T10, T11 that together with generator G4 and transistor T12 form the output amplifier A3. Transistors T10, T11 are connected to ground (through resistors R4) and to the generator in the same way as T1, T2; the collector of T11 is connected to the base of T12, whose collector is grounded and whose emitter is connected to the load resistor Rp across which the output signal is extracted.

The actual values of the resistances and of the currents supplied by the generators depend on the intended applications; besides the condition already mentioned for RC1, RC2, such resistances and currents must ensure maximum switching velocity of T6, T7, T8, T9 and make them operate in the linear zone of their characteristics for most the dynamic range of the input signal. This is necessary as amplifiers A1, A2 have tasks of signal reconstruction and then the output signal must faithfully follow the input signals. For circuits LD and A3 on the contrary the level of the output signals is important and then the respective resistances and currents could be also chosen so as to cause the transistors of such circuits to operate in the non-linear zone.

A structure like the one described presents a number of important advantages:
— the ratio between the gains of A1, A2 is obtained by a suitable choice of feedback resistances RC1, RC2 that allows also, as known, an operation independent of the transistor characteristics, and improvements in the operation linearity and in the performances as to the transmitted band or the transmission velocity;
— the use of differential amplifiers to process both the local and the line signals ensures the insensibility to common-mode noise, indispensable to work with balanced signals;
— the subtraction of the local signal from the composite signal obtained by connecting the collectors of the transistor of A1, A2 allows the operation always on balanced signals inside IN; thus any variation in the resistances equally affects both signal components, and does not affect the output signal.

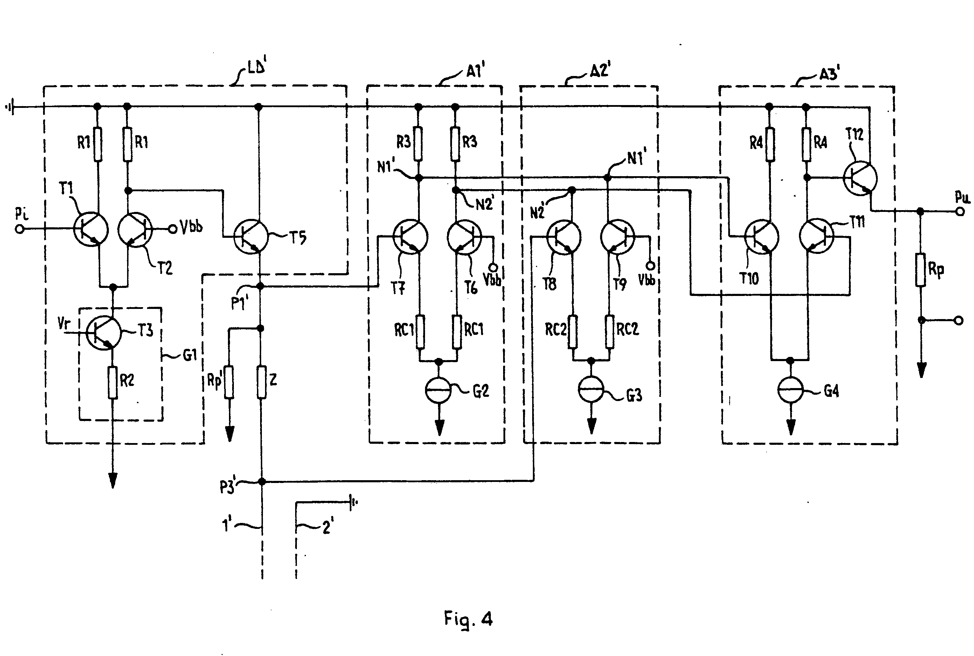

Fig. 3 shows a variant of the diagram of Fig. 1 in the case of unbalanced signals. The line will comprise only conductor 1' (the second conductor is ground), at whose points P1', P3' amplifiers A1', A2' analogous to A1, A2 (Fig. 1) are connected; A1', A2' are in turn connected to summing nodes N1', N2' and then to output amplifier A3'. References LD', Rp', Z denote respectively the line driver, its load resistor and the line termination impedance.

In the circuit scheme of Fig. 4, as the line conductor 2' is grounded, transistor T4 of driver LD' has been eliminated. The only other modification with respect to the scheme of Fig. 2 is that the bases of T6, T9 are connected to the intermediate voltage Vbb (already available in the circuit) instead of being connected to the line. The structure of amplifiers A1', A2' is then basically equal to that of A1, A2 (Fig. 2) so that even this scheme presents the advantages previously stated.

The scheme of Fig. 4 allows, as seen the elimination of a transistor; any way it can be advantageous from the manufacture standpoint, to use the same mask to realize an integrated circuit which can be used both for balanced and unbalanced lines by simply modifying a number of connections.

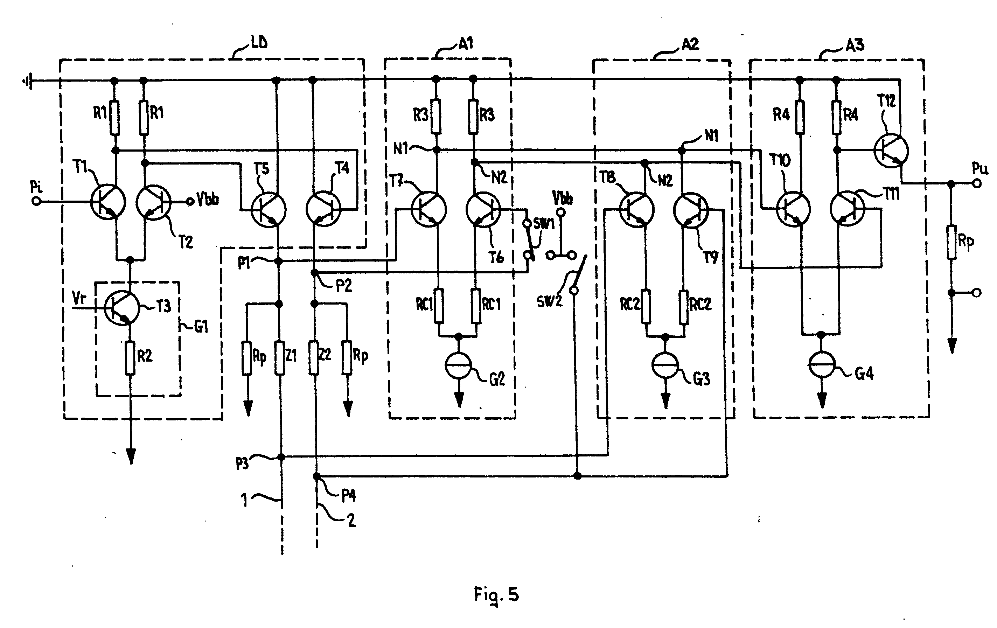

This possibility is depicted in Fig. 5, in which there are still present all the components of Fig. 2, besides two two-position switches SW1, SW2, connected in series to the bases of T6, T9; these switches schematize the possibility of connecting such bases either to points P2, P4 of the line or to voltage Vbb, according to whether the circuit must be employed for balanced or unbalanced signals.

It is clear that what described has been given only by way of example and not in a limiting sense and that variations and modifications are possible without going out of the scope of the invention.

## Claims

1. Transceiver for full-duplex transmission of digital signals on a single line (L) which is terminated by the local and a remote transceiver and on which a composite signal comprising a fraction of a locally-generated and transmitted signal and a fraction of a signal transmitted by the remote transceiver is present, the transceiver comprising a local signal generator (GE) possibly supplemented by a line driver (LD) emitting the locally-generated signal (S1) at a level suitable for the transmission on the line, means for extracting from the composite signal the fraction of the signal transmitted by the remote transceiver by subtracting from the composite signal a signal representing the locally-generated signal, the extracting means containing a differential amplifier (A3, A3'), and a signal receiver connected to the differential amplifier, the composite signal and the locally-generated signal being tapped at respective sides of a termination impedance (Z1, Z2, Z) separating the line from the local signal generator, characterized in that, for supplying the differential amplifier (A3, A3'), the extracting means comprises a second differential amplifier (A1, A1') the inputs of which are connected to the output terminals of the local signal generator (GE, LD) and which has a non-inverting and an inverting output, and further comprises a third differential amplifier (A2, A2') the inputs of which are to be connected to the line and which also has a non-inverting and an inverting output, the inverting output of the second amplifier and the non-inverting output of the third amplifier being connected to form a first summing node (N1, N1') and the non-inverting output of the second amplifier and the inverting output of the third amplifier being connected to form a second summing node (N2, N2'), said summing nodes being connected each to one of the inputs of the first differential amplifier (A3).

2. Transceiver according to claim 1, characterized in that the line driver (LD) and the means extracting the remote signal (A1, A2, A3, N1, N2; A1', A2', A3', N1', N2') are realized as an integrated circuit consisting of:

— a first and a second transistor (T1, T2), the bases of which are connected respectively to signal generator (GE) and to a voltage intermediate between a voltage corresponding to high logic level and a reference voltage corresponding to a low logic level, the emitters are connected to the collector of a third transistor (T3) whose base is connected to said reference voltage and which forms a first current generator (G1), and the collectors are grounded through resistors;

— a fourth and a fifth transistor (T4, T5) connected in the emitter follower configuration and having line driving functions, the bases of the fourth and fifth transistor (T4, T5) being respectively connected to the collectors of said first and second transistors (T1, T2) while the emitters are to be connected directly or indirectly to the line (L);

— a sixth and seventh transistor (T6, T7), that together with a second current generator (G2) form said second amplifier (A1, A1'), the base of the seventh transistor being connected to the emitter of the fifth transistor (T5) and is then to be connected to the line (L), the base of the sixth transistor being selectively connectable either to the emitter of the fourth transistor (T4), and then to the line (L), or to said intermediate voltage (Vbb) dependant on whether the line is balanced or unbalanced, the collectors of said sixth and seventh transistors (T6, T7) being grounded through resistors (R3) and the emitters being connected to said second current generator (G2) through feedback resistors (RC1);

— an eighth and a ninth transistor (T8, T9) that with a third current generator (G3) form the third differential amplifier (A2, A2') and have the collectors connected to the collectors of said sixth and seventh transistors to form said second and first summing nodes (N2, N1, N2', N1') respectively, and the emitters connected to said third current generator (G3) through feedback resistors, the base of the eighth transistor (T8) being connected to a point (P3) of the line (L) in which said composite signal or a first component thereof is present, and the base of the ninth transistor being selectively connectable either to a point (P4) of the line (L), in which a second component of said composite signal is present, or to said intermediate voltage (Vbb), according to whether the line is balanced or unbalanced,

— a tenth and eleventh transistor (T10, T11), that with a fourth current generator (G4) and a twelfth transistor (T12) form said first amplifier (A3, A3') and have the bases connected to said first and second summing nodes (N1, N2, N1', N2'), the emitters connected to said fourth current generator (G4) and the collectors grounded through resistors (R4), the collector of the eleventh transistor being connected also to the base of the twelfth transistor (T12) whose collector is grounded, while the emitter forms the output of the integrated circuit.

3. Transceiver according to claim 1, characterized in that, for use with unbalanced lines, the line driver (LD') and the means for extracting the remote signal are realized as an integrated circuit composed of:

— a first and a second transistor (T1, T2) whose bases are connected respectively to signal generator (GE) and to a voltage intermediate between a voltage corresponding to a high logic level and a reference voltage corresponding to a low logic level, whose emitters are connected to the collector of a third transistor (T3) having its base connected to said reference voltage and forming a first current generator (G1), and whose collectors are grounded through resistors (R1);

— a fourth transistor (T5), connected in the "emitter follower" configuration and having line driving functions, the base and the emitter of said fourth transistor respectively being connected to the collector of the second transistor (T2) and to be connected to the line (1');

— a fifth and a sixth transistor (T6, T7) that together with a second current generator (G2) form said second amplifier (A1'), and have their bases connected respectively to the emitter of the fourth transistor (T5), and then to the line (1'), and to said intermediate voltage (Vbb), their collectors grounded through resistors (R3) and the emitters connected to said second current generator (G2) through feedback resistors (RC1);

— a seventh and an eighth transistor (T8, T9) that with a third current generator (G3) form the third differential amplifier (A2'), and have the collectors connected to the collectors of said fifth and sixth transistors (T6, T7) to form respectively said second and first summing nodes (N2', N1'), and the emitters connected to said third current generator (G3) through feedback resistors (RC2); the base of the seventh transistor (T8) being connected to a point (P3') of line (1') in which said composite signal is present and the base of the eighth transistor (T9) being connected to said intermediate voltage (Vbb);

— a ninth and tenth transistors (T10, T11) that with a fourth current generator (G4) and an eleventh transistor (T12) form said first amplifier (A3'), have their bases connected to said first and second summing nodes (N1', N2'), their emitters connected to said fourth current generator (G4) and their collectors grounded through resistors (R4), the collector of the tenth transistor (T11) being connected also to the base of an eleventh transistor (T12), whose collector is grounded while the emitter forms the output of the integrated circuit.

4. Transceiver according to claims 2 and 3 characterized in that the feedback resistors (RC1) of the transistors of the second differential amplifier (A1; A1') and the feedback resistors of the transistors of the third differential amplifier (A2; A2') have a resistance ratio such that the gain of the second amplifier (A1, A1') is half the gain of the third amplifier (A2, A2').

**Revendications**

1. Emetteur-récepteur pour transmission en duplex intégral de signaux numériques sur une seule voie (L), qui est terminée par l'émetteur-récepteur local et par un émetteur-récepteur éloigné et qui présente un signal composé comprenant une fraction du signal engendré et transmis localement aussi bien qu'une fraction d'un signal transmis par l'émetteur-récepteur éloigné, l'émetteur-récepteur comprenant un générateur local de signaux (GE) éventuellement associé à un circuit de pilotage de la ligne (LD) qui émet le signal engendré localement, des moyens pour extraire du signal composé la fraction du signal transmis par l'émetteur-récepteur éloigné en soustrayant du signal composé un signal représentant le signal engendré localement, les moyens d'extraction comprenant un amplificateur différentiel (A3, A3') et un récepteur connecté à l'amplificateur différentiel, le signal composé et le signal engendré localement étant présents aux extrémités opposées d'une impédance de terminaison (Z1, Z2, Z) qui sépare la ligne du générateur local de signaux, caractérisé en ce que pour l'alimentation de l'amplificateur différentiel (A3, A3') les moyens d'extraction comprennent un deuxième amplificateur différentiel (A1, A1') dont les entrées sont connectées aux bornes de sortie du générateur local de signaux (GE, LD) et qui comporte une sortie non-inversante et une sortie inversante, et comprennent également un troisième amplificateur différentiel (A2, A2') dont les entrées doivent être connectées à la ligne et qui comporte aussi une entrée non inversante et une entrée inversante, la sortie inversante du deuxième amplificateur et la sortie non inversante du troisième amplificateur étant connectées pour former un premier noeud additionneur (N1, N1') tandis que la sortie non inversante du deuxième amplificateur et la sortie inversante du troisième amplificateur sont connectées pour former un second noeud additionneur (N2, N2'), chaque noeud étant connecté à une entrée du premier amplificateur différentiel (A3).

2. Emetteur-récepteur, selon la revendication 1, caractérisé en ce que le circuit de pilotage de la ligne (LD) et les moyens d'extraction du signal distant (A1, A2, A3, N1, N2; A1', A2', A3', N1', N2') sont réalisés sous la forme d'un circuit intégré, constitué par:

— un premier et un deuxième transistor (T1, T2), dont les bases sont connectées respectivement au générateur de signaux (GE) et à une tension intermédiaire entre une tension correspondant à un niveau logique élevé et une tension de référence correspondant à un niveau logique bas; les émetteurs sont connectés au collecteur d'un troisième transistor (T3) ayant la base connectée à la tension de référence et constituant un premier générateur de courant (G1); les collecteurs sont connectés à masse au moyen de résistances;

— un quatrième et un cinquième transistor (T4, T5), connectés dans la configuration à émetteur commun et ayant fonctions de pilotage de la ligne, les bases du quatrième et cinquième transistors (T4, T5) étant respectivement connectées aux collecteurs du premier et du deuxième transistor (T1, T2) tandis que les émetteurs doivent être connectés directement ou indirectement à la ligne (L);

— un sixième et un septième transistor (T6, T7) qui, avec un deu deuxième générateur de courant (G2), constituent le deuxième amplificateur différentiel (A1; A1'), la base du septième transistor étant connectée à l'émetteur du cinquième transistor (T5) et par conséquent devant être connectée à la ligne (L), la base du sixième transistor pouvant être connectée sélectivement à l'émetteur du quatrième transistor (T4), et par conséquent à la ligne (L), ou à la tension intermédiaire (Vbb), suivant que la ligne est symétrique ou dissymétrique, les collecteurs des sixième et septième transistors (T6, T7) étant connectés à masse au moyen de résistances (R3), et les émetteurs étant connectés au deuxième générateur de courant (G2) au moyen de résistances de contre-réaction (RC1);

— un huitième et un neuvième transistor (T8, T9) qui avec un troisième générateur de courant (G3) constituent le troisième amplificateur différentiel (A2; A2'), et ont leurs collecteurs connectés aux collecteurs desdits sixième et septième transistors pour constituer les second et premier noeuds additionneurs (N2, N1; N2', N1'), et les émetteurs connectés au troisième générateur de courant (G3) au moyen de résistances de contreréaction, la base du huitième transistor (T8) étant connectée à un point (P3) de la ligne (L), recevant le signal composé ou une première composante de celui-ci, et la base du neuvième transistor pouvant être connectée sélectivement à un point (P4) de la ligne (L) recevant une seconde composante dudit signal, ou à ladite tension intermédiaire (Vbb), selon que la ligne est symétrique ou dissymétrique;

— un dixième et un onzième transistor (T10, T11) qui avec un quatrième générateur de courant (G4) et un douzième transistor (T12) constituent le premier amplificateur (A3; A3'), et qui ont leurs bases connectées au premier et second noeud additionneur (N1, N2; N1', N2'), leurs émetteurs connectés au quatrième générateur de courant (G4) et leurs collecteurs connectés à masse au moyen de résistances (R4), le collecteur de l'onzième transistor étant connecté aussi à la base du douzième transistor (T12) dont le collecteur est connecté à masse, tandis que l'émetteur constitue la sortie du circuit intégré.

3. Emetteur-récepteur selon la revendication 1, caractérisé en ce que, pour l'emploi avec des lignes dissymétriques, le circuit de pilotage de la ligne (LD') et les moyens d'extraction du signal distant sont réalisés sous la forme d'un circuit intégré constitué par:

— un premier et un deuxième transistor (T1, T2) dont les bases sont respectivement connectées au générateur de signaux (GE) et à une tension intermédiaire entre une tension correspondant à un niveau logique élevé et une tension de référence correspondant à un niveau logique bas, les émetteurs sont connectés au collecteur d'un troisième transistor (T3) qui a la base connectée à la tension de référence et qui constitue un premier générateur de courant (G1), et les collecteurs sont connectés à masse au moyen de résistances (R1);

— un quatrième transistor (T5) connecté dans la configuration à émetteur commun et ayant fonction de pilotage de la ligne, ce quatrième transistor ayant sa base connectée au collecteur du deuxième transistor (T2) tandis que l'émetteur doit être connecté à la ligne (1');

— un cinquième et un sixième transistor (T6, T7) qui avec un deuxième générateur de courant (G2) constituent le deuxième amplificateur différentiel (A1'), et qui ont leurs bases connectées respectivement à l'émetteur du quatrième transistor (T5), et par conséquent à la ligne (1'), et la tension intermédiaire (Vbb), leurs collecteurs connectés à masse au moyen de résistances (R3) et leurs émetteurs connectés au deuxième générateur de courant (G2) au moyen de résistances de contre-réaction (RC1);

— un septième et un huitième transistor (T8, T9) qui avec un troisième générateur de courant (G3) constituent le troisième amplificateur différentiel (A2'), et ont leurs collecteurs connectés aux collecteurs du cinquième et sixième transistor (T6, T7) pour réaliser respectivement le second et le premier noeud additionneur (N2', N1') et leurs émetteurs connectés au troisième générateur de courant (G3) au moyen de résistances de contre-réaction (RC2), la base du septième transistor (T8) étant connectée à un point (P3') de la ligne (1') recevant le signal composé, et la base du huitième transistor (T9) étant connectée à la tension intermédiaire (Vbb);

— un neuvième et un dixième transistor (T10, T11), qui avec un quatrième générateur de courant (G4) et un onzième transistor (T12) constituent le premier amplificateur (A3'), et qui ont leurs bases connectées au premier et au second noued additionneur (N1', N2'), leurs émetteurs connectés au quatrième générateur de courant (G4) et leurs collecteurs connectés à masse au moyen de résistances (R4), le collecteur du dixième transistor (T11) étant connecté aussi à la base du onzième transistor (T12) dont le collecteur est connecté à masse, tandis que l'émetteur constitue la sortie du circuit intégré.

4. Emetteur-récepteur selon les revendications 2 ou 3, caractérisé en ce qu'entre les résistances de contre-réaction (RC1) des transistors du deuxième amplificateur différentiel (A1; A'), et les résistances de contre-réaction des transistors du troisième amplificateur différentiel (A2; A2') le rapport de valeurs est tel que le gain du second amplificateur (A1; A1') soit moitié du gain du troisième amplificateur.

**Patentansprüche**

1. Senderempfänger für die Vollduplex-Übertragung digitaler Signale auf einer einzelnen Leitung (L), die durch den örtlichen und einen entfernten Senderempfänger abgeschlossen ist und auf der ein zusammengesetztes Signal vorliegt, das einen Bruchteil eines örtlich erzeugten und Signals und einen Bruchteil eines vom entfernten Senderempfänger gesendeten Signals enthält, mit einem gegebenenfalls durch einen Leitungstreiber (LD), der das örtlich erzeugte Signal (S1) auf einen für die Übertragung auf der Leitung geeigneten Pegel anhebt, ergänzten örtlichen Signalgenerator (GE), einer Einrichtung zum Extrahieren des vom entfernten Senderempfänger gesendeten Signalbruchteils aus dem zusammengesetzten Signal durch Subtraktion eines das örtlich erzeugte Signal wiedergebenden Signals vom zusammengesetzten Signal, wobei die extrahierende Einrichtung einen Differenzverstärker (A3, A3') enthält, und einem mit dem Differenzverstärker verbundenen Signalempfänger, wobei das zusammengesetzte Signal und das örtlich erzeugte Signal an entsprechenden Seiten einer Abschlußimpedanz (Z1, Z2, Z) abgegriffen sind, die die Leitung vom örtlichen Signalgenerator trennt, dadurch gekennzeichnet, daß zum Speisen des Differenzverstärkers (A3, A3') die extrahierende Einrichtung einen zweiten Differenzverstärker (A1, A1') umfaßt, dessen Eingangsklemmen mit den Ausgangsklemmen des örtlichen Signalgenerators (GE, LD) verbunden sind und der einen nichtinvertierenden und einen invertierenden Ausgang aufweist, und weiterhin einen dritten Differenzverstärker (A2, A2') aufweist, dessen Eingangsklemmen mit der Leitung zu verbinden sind und der ebenfalls einen nichtinvertierenden und einen invertierenden Ausgang aufweist, und daß der invertierende Ausgang des zweiten Verstärkers und der nichtinvertierende Ausgang des dritten Verstärkers zue Bildung eines ersten Summier-Knotens (N1, N1') verbunden sind und der nicht-invertierende Ausgang des zweiten Verstärkers und der invertierende Ausgang des dritten Verstärkers zur Bildung eines zweiten Summierknotens (N2, N2') verbunden sind und die Summierknoten jeweils mit einem der Eingänge des ersten Differenzverstärkers (A3) verbunden sind.

2. Sender-Empfänger nach Anspruch 1, dadurch gekennzeichnet, daß der Leitungstreiber (LD) und die das entfernte Signal extrahierende Einrichtung (A1, A2, A3, N1, N2; A1', A2', A3', N1', N2') als integrierte Schaltung verwirklicht sind, die aus folgenden Teilen besteht:
— einem ersten und einem zweiten Transistor (T1, T2), deren Basen mit dem Signalgenerator (Ge) verbunden bzw. an eine Zwischenspannung, die zwischen einer dem hohen logischen Pegel entsprechenden Spannung und einer dem niedrigen logischen Pegel entsprechenden Bezugsspannung liegt, angelegt sind, deren Emitter mit dem Kollektor eines dritten Transistors (T3) verbunden sind, dessen Basis an die Bezugsspannung angeschlossen ist und der einen ersten Stromgenerator (G1) bildet, und deren Kollektoren über Widerstände geerdet sind;
— einem vierten und einem fünften Transistor (T4, T5), die in Emitterfolgerschaltung geschaltet sind und Leitungstreiberfunktionen haben und deren Basen mit dem Kollektor des ersten bzw. des zweiten Transistors (T1, T2) verbunden und deren Emitter direkt oder indirekt mit der Leitung (L) zu verbinden sind;
— einem sechsten und einem seibten Transistor (T6, T7), die gemeinsam mit einem zweiten Stromgenerator (G2) den zweiten Verstärker (A1, A1') bilden und von denen der siebte Transistor mit seiner Basis an den Emitter des fünften Transistors (T5) und dann an die Leitung (L) anzuschließen ist und der sechste Transistor mit seiner Basis selektiv entweder an den Emitter des vierten Transistors (T4) und dann an die Leitung (L) oder an die Zwischenspannung (Vbb) anschließbar ist abhängig davon, ob die Leitung balanciert oder unbalanciert ist, und beide Transistoren (T6, T7) mit ihren Kollektoren über Widerstände (R3) geerdet und mit ihren Emittern über Rückkopplungswiderstände (RC1) an den zweiten Stromgenerator (G2) angeschlossen sind;
— einem achten und einem neunten Transistor (T8, T9), die mit einem dritten Stromgenerator (G3) den dritten Differenzverstärker (A2, A2') bilden und mit ihren Kollektoren an die Kollektoren des sechsten bzw. siebten Transistors unter Bildung des zweiten bzw. ersten Summier-Knotens (N2, N1, N2', N1') und mit ihren Emittern über Rückkopplungswiderstände an den dritten Stromgenerator (G3) angeschlossen sind, wobei der achte Transistor (T8) mit seiner Basis an einen Punkt (P3) der Leitung (L) angeschlossen ist, an der das zusammengesetzte Signal oder eine erste Komponente desselben vorliegt, und der neunte Transistor mit seiner Basis selektiv an einem Punkt (P4) der Leitung (L), an der eine zweite Komponente des zusammengesetzten Signals vorliegt, oder an die Zwischenspannung (Vbb) anschließbar ist, adhängig davon ob die Leitung balanciert oder unbalanciert ist;
— einem zehnten und einem elften Transistor (T10, T11), die mit einem vierten Stromgenerator (G4) und einem zwölften Transistor (T12) den ersten Verstärker (A3, A3') bilden und mit ihren Basen an den ersten bzw. den zweiten Summier-Knoten (N1, N2, N1', N2') und mit ihren Emittern an den vierten Stromgenerator (G4) angeschlossen sind und mit ihren Kollektoren über Widerstände (R4) geerdet sind, wobei der Kollektor des elften Transistors auch mit der Basis des zwölften Transistors (T12) verbunden ist, dessen Kollektor geerdet ist und dessen Emitter den Ausgang der integrierten Schaltung bildet.

3. Senderempfänger nach Anspruch 1, dadurch gekennzeichnet, daß zur Verwendung mit unsymmetrischen Leitungen der Leitungstreiber (LD') und die das entfernte Signal extrahierende Einrichtung als integrierte Schaltung verwirklicht sind, die aus folgenden Teilen zusammengesetzt ist:

— einem ersten und einem zweiten Transistor (T1, T2), deren Basen mit dem Signalgenerator (GE) verbunden bzw. an eine Zwischenspannung, die zwischen einer dem hohen logischen Pegel ententsprechenden Spannung und einer dem niedrigen logischen Pegel entsprechenden Bezugsspannung liegt, angelegt sind, deren Emitter mit dem Kollektor eines dritten Transistors (T3) verbunden sind, dessen Basis an die Bezugsspannung angeschlossen ist und der einen ersten Stromgenerator (G1) bildet, und deren Kollektoren über Widerstände (R1) geerdet sind;

— einem vierten Transistor (T5), der in Emitterfolgerschaltung geschaltet ist und Leitungstrieberfunktionen hat und dessen Basis mit dem Kollektor des zweiten Transistors (T2) verbunden und dessen Emitter mit der Leitung (1') zu verbinden ist;

— einem fünften und einem sechsten Transistor (T6, T7), die gemeinsam mit einem zweiten Stromgenerator (G2) den zweiten Verstärker (A1') bilden und von denen der sechste Transistor mit seiner Basis an den Emitter des vierten Transistors (T5) und dann an die Leitung (1') angeschlossen ist und der fünfte Transistor mit seiner Basis an die Zwischenspannung (Vbb) angeschlossen ist und beide Transistoren (T6, T7) mit ihren Kollektoren über Widerstände (R3) geerdet und mit ihren Emittern über Rückkopplungswiderstände (RC1) an den zweiten Stromgenerator (G2) angeschlossen sind;

— einem siebten und einem achten Transistor (T8, T9), die mit einem dritten Stromgenerator (G3) den dritten Differenzverstärker (A2') bilden und mit ihren Kollektoren an die Kollektoren des fünften bzw. sechsten Transistors (T6, T7) unter Bildung des zweiten bzw. ersten Summier-Knotens (N2', N1') und mit ihren Emittern über Rückkopplungswiderstände (RC2) an den dritten Stromgenerator (G3) angeschlossen sind, wobei der siebte Transistor (T8) mit seiner Basis an einen Punkt (P3') der Leitung (1') angeschlossen ist, an der das zusammengesetzte Signal vorliegt, und der achte Transistor (T9) mit seiner Basis an die Zwischenspannung (Vbb) angeschlossen ist;

— einem neunten und einem zehnten Transistor (T10, T11), die mit einem vierten Stromgenerator (G4) und einem elften Transistor (T12) den ersten Verstärker (A3') bilden und mit ihren Basen an den ersten bzw. den zweiten Summier-Knoten (N1', N2') und mit ihren Emittern an den vierten Stromgenerator (G4) angeschlossen sind und mit ihren Kollektoren über Widerstände (R4) geerdet sind, wobei der Kollektor des zehnten Transistors (T11) auch mit der Basis des elften Transistors (T12) verbunden ist, dessen Kollektor geerdet ist und dessen Emitter den Ausgang der integrierten Schaltung bildet.

4. Senderempfänger nach den Ansprüchen 2 oder 3, dadurch gekennzeichnet, daß die Rückkopplungswiderstände (RC1) der Transistoren des zweiten Differenzverstärkers (A1; A1') und die Rückkopplungswiderstände der Transistoren des dritten Differenzverstärkers (A2; A2') ein solches Verhältnis der Widerstandswerte haben, daß die Verstärkung des zweiten Verstärkers (A1, A1') die Hälfte der Verstärkung des dritten Verstärkers (A2, A2') beträgt.

# 0 026 931

Fig. 1

Fig. 3

Fig.2

0 026 931

Fig. 4

Fig. 5

4